(19) Europäisches Patentamt
European Patent Office
Office européen des brevets

(11) EP 0 731 117 A2

(12) EUROPÄISCHE PATENTANMELDUNG

(43) Veröffentlichungstag:
11.09.1996 Patentblatt 1996/37

(51) Int. Cl.[6]: C08F 265/02, C08F 8/14, C09D 11/10

(21) Anmeldenummer: 96103181.2

(22) Anmeldetag: 01.03.1996

(84) Benannte Vertragsstaaten:
AT BE CH DE DK ES FI FR GB GR IE IT LI NL PT SE

(30) Priorität: 09.03.1995 DE 19508191

(71) Anmelder: Vianova Resins GmbH
D-55252 Mainz-Kastel (DE)

(72) Erfinder:
- Mergardt, Bernd, Dr.
D-21629 Neu Wulmstorf (DE)
- Finke, Manfred, Dr.
D-65779 Kelkheim (DE)
- Wallach, Thomas, Dr.
D-65597 Hünfelden (DE)

# (54) Anionische Polymermischungen mit reduzierter Schaumbildung in Wasser

(57) Anionische Polymermischungen aus

a) einem Säuregruppen-haltigen Polymer A, das durch Polymerisation von Carboxylgruppen-haltigen ethylenisch ungesättigten Verbindungen mit weiteren ethylenisch ungesättigten Verbindungen in Gegenwart von flüchtigen basischen Neutralisationsreagenzien erhalten worden ist und gegebenenfalls
b) einem wasserunlöslichen Polymer B in Form von Latexteilchen, herstellbar durch Emulsionspolymerisation von ethylenisch ungesättigten Verbindungen in Gegenwart des Polymeren A,

weisen als Bindemittel in Druckfarben und Drucklacken auf Wasserbasis eine reduzierte Schaumbildung auf.

EP 0 731 117 A2

**Beschreibung**

Polymer-Mischungen mit Säuregruppen, die als Bindemittel für Coatings, speziell auch für Druck-Coatings auf Wasserbasis eingesetzt werden, sind in der Literatur zahlreich beschrieben. Derartige Polymermischungen enthalten anionische Polymerharze, die beispielsweise hergestellt werden durch Copolymerisation von unpolaren und Säuregruppen-haltigen Monomeren durch Massepolymerisation in kontinulierlich arbeitenden Anlagen (EP 0 068 024 und DE-A 32 25 876) oder durch Batchverfahren mit Lösungsmitteln (EP-A 0 129 913).

Ein Nachteil von hochviskosen Polymerharzen, die über kontinuierliche Prozesse erhalten werden, besteht darin, daß im Harz verbleibende Restmengen an Monomeren, Lösungsmitteln oder Zusatzstoffen unvermeidbar sind, weil ansonsten Plugging oder Channeling des Reaktors auftritt. (G.E.H. Joosten, H.W. Hoogstraten, C. Ouwerkerk; Ind. Eng. Chem. Process Des. Dev. 1981, 20, 177). Diese die Produkteigenschaften negativ beeinflussenden Reststoffe können nachträglich in der Regel nicht vollständig oder nur durch mehr technischen Aufwand, beispielsweise in mehreren Entgasungs-Stufen, entfernt werden.

Es sind auch Lösungsmittel-freie Harz-Systeme entwickelt worden, beispielsweise durch aufeinanderfolgende Emulsionspolymerisation von Carboxylgruppen enthaltenden Monomermischungen und unpolaren Monomermischungen (WO-A 91 049 90) oder durch Massepolymerisation von Carboxylgruppen enthaltenden Monomermischungen bei gleichzeitiger "in situ"-Kondensationsreaktion mit Monohydroxyverbindungen und anschließender Emulsionspolymerisation von unpolaren Monomeren (EP-A 0 643 080).

Ein spezieller Nachteil der Harz-Systeme, die nach den beschriebenen Verfahren hergestellt worden sind, stellt sich bei ihrer Verwendung als Bindemittel in Druck-Coatings, beispielsweise in Überdrucklacken und Druckfarben, heraus. So wird von der Druckindustrie die Forderung gestellt, daß Wasser-basierende Systeme gleichwertig oder besser sein sollen als Lösungsmittel-basierende Systeme, besonders wenn es um die Trocknungsgeschwindigkeit geht. Als zentrales Problem tritt dabei mit den genannten Harz-Systemen eine uner-wünschte Schaumbildung der neutralisierten Makromoleküle mit Säuregruppen beim Drucken auf, so daß unter Zusatz von erheblichen Mengen an Entschäumer gearbeitet werden muß. Diese Vorgehensweise ist mitunter erfolgreich, auf schnellaufenden Druckmaschinen jedoch zumeist nicht zufriedenstellend, da vielfach eine Verschlechterung der Qualität des Druckbilds in Kauf genommen werden muß.

Es war deshalb Aufgabe der vorliegenden Erfindung, Polymer-Mischungen mit Säuregruppen als Bindemittel für Druckfarben zu entwickeln, die keine oder zumindest eine geringere Schaumbildung beim Drucken ergeben im Vergleich zu den aus dem Stand der Technik bekannten Kunstharzen.

Es wurde nun gefunden, daß Polymer-Mischungen, die ein durch Polymerisation von Carboxylgruppen-haltigen ethylenisch ungesättigten Verbindungen mitweiteren ethylenisch ungesättigten Verbindungen hergestelltes Polymer A enthalten, im neutralisierten Zustand in Wasser eine besonders geringe Schaumbildung zeigen, wenn die Synthese des Polymeren A in Gegenwart flüchtiger basischer Neutralisationsreagenzien durchgeführt worden ist.

Die Erfindung betrifft anionische Polymer-Mischungen mit reduzierter Schaumbildung in Wasser, enthaltend

a) ein gegebenenfalls neutralisiertes oder teilneutralisiertes Säuregruppen-haltiges Polymer A, hergestellt durch Polymerisation von Carboxylgruppen-haltigen ethylenisch ungesättigten Verbindungen mit weiteren ethylenisch ungesättigten Verbindungen in Gegenwart von flüchtigen basischen Neutralisationsreagenzien und gegebenefalls "in situ"-Kondensation mit Monohydroxyverbindungen, und gegebenenfalls
b) ein wasserunlösliches Polymer B in Form von Latexteilchen, herstellbar durch Emulsionspolmerisation von ethylenisch ungesättigten Verbindungen in Gegenwart des Polymeren A.

Ein weiterer Gegenstand der Erfindung ist ein Verfahren zur Herstellung von anionischen Polymer-Mischungen mit reduzierter Schaumbildung in Wasser, indem

a) ein Säuregruppen-haltiges Polymer A hergestellt wird durch Polymerisation von Carboxylgruppen-haltigen ethylenisch ungesättigten Verbindungen mit weiteren ethylenisch ungesättigten Verbindungen in Gegenwart von flüchtigen basischen Neutralisationsreagenzien und gegebenenfalls "in situ"-Kondensation mit Monohydroxyverbindungen und gegebenenfalls anschließend neutralisiert oder teilneutralisiert wird und die flüchtigen basischen Neutralisationsreagenzien zumindest teilweise aodestilliert werden und gegebenenfalls
b) ein wasserunlösliches Polymer B in Form von Latexteilchen hergestellt wird durch Emulsionspolymerisation von ethylenisch ungesättigten Verbindungen in Gegenwart des gegebenenfalls neutralisierten oder teilneutralisierten Polymeren A.

Gegenstand der vorliegenden Erfindung sind auch die Säuregruppen-haltigen Polymere A, hergestellt durch Polymerisation von Carboxylgruppen-haltigen ethylenisch ungesättigten Verbindungen mit weiteren ethylenisch ungesättigten Verbindungen in Gegenwart von flüchtigen, basischen Neutralisationsreagenzien und gegebenenfalls "in situ"-Kondensation mit Monohydroxyverbindungen in Gegenwart basischer Neutralisationsreagentien, deren Salze sowie deren Lösungen in Wasser.

Die erfindungsgemäßen Polymere A können in zumindest teilneutralisiertem Zustand der Gruppe der Polymer-Tenside zugerechnet werden. Sie verfügen in Wasser über ein effektives Aufnahmevermögen für Pigmente und Füllkörper. Dieses für Druck-Coatings erwünschte Verhalten sowie weitere spezifische Eigenschaften werden bestimmt von der Molekülgröße sowie von der Molekülarchitektur, also von Art, Menge und Verteilung geladener, polarer und unpolarer Anteile.

Wesentlich für die Eigenschaften der erfindungsgemäßen Polymere A sind, neben den zahlenmäßigen Verhältnisse der Comonomereinheiten, Anteil und Typ der Seitenketten, die Säurezahlen, Molekular-Gewichte und -Verteilungen, Glasübergangstemperaturen ($T_g$) und insbesondere auch die Reaktionsbeidngungen bei der Synthese.

Die Säurezahlen (mg KOH/g Polymer) der Polymere A liegen vorzugsweise im Bereich von 90 bis 400, insbesondere 170 bis 275. Der Anteil an in Estergruppen gebundenen Hydroxyverbindungen beträgt vorzugsweise zwischen 0 und 25, insbesondere zwischen 0 und 18 Gew.-%. Vorzugsweise wird ein gewichtsmittleres Molekulargewicht von 300 bis 100.000, insbesondere 800 bis 40.000, besonders bevorzugt 1.000 bis 25.000, erhalten. Die Glasübergangstemperaturen der Polymere liegen vorzugsweise zwischen 0 und 180 °C, insbesondere 30 und 160 °C, besonders bevorzugt 50 und 150 °C.

Gemäß der vorliegenden Erfindung ist zumindest eine teilweise Neutralisation der Säuregruppen-tragenden Monomere mit flüchtigen basischen Verbindungen während der Polymerisation zu den erfindungsgemäßen Polymeren A erforderlich. Die Carboxylgruppen-haltigen Monomere sind stärkere Säuren als die daraus hergestellten Carboxylgruppen-haltigen Polymere, so daß die Monomere die Polymeren aus ihren Salzen verdrängen. Daher steht während der gesamten Polymerisation immer ein ausreichender Anteil an neutralisierten Carboxylatgruppen-haltigen Monomeren für die Polymerisation zur Verfügung. Auf diese Weise wird vermutlich eine durch polare Wechselwirkung bedingte lokale Anhäufung der polaren Monomere während der Makromolekül-Bildung unterbunden, so daß die Monomere weitgehend statistisch in das Makromolekül eingebaut werden können.

Zur Einführung von Carbonsäuregruppen in das Polymer vom Typ A sind ungesättigte Mono- oder Dicarbonsäuren oder deren Gemische einsetzbar. Als ungesättigte Monocarbonsäuren werden Acrylsäure, Methacrylsäure und/oder Crotonsäure, einzeln oder im Gemisch, verwendet. Dazu zählen auch Halbester von Malein- und Fumarsäure mit gesättigten Alkoholen, die 1 bis 10 Kohlenstoff-Atome enthalten. Als ungesättigte Dicarbonsäuren seien Dicarbonsäuren, die 4 bis 6 Kohlenstoff-Atome enthalten, genannt, beispielsweise Maleinsäure, Itaconsäure, Mesaconsäure, Fumarsäure, Methylenmalonsäure, Citraconsäure, deren Salze oder gegebenenfalls Anhydride. Der Anteil der Carboxylgruppen-haltigen Monomere beträgt vorzugsweise 5 bis 70 Gew.-%, insbesondere 15 bis 55 Gew.-%, bezogen auf die Gesamtmenge der Monomere im Polymer A.

Als Comonomere für die Carbonsäuregruppen-haltigen Monomere eignen sich prinzipiell alle radikalisch polymerisierbaren ethylenisch ungesättigten Verbindungen, bevorzugt werden hydrophobe Monomere, beispielsweise Vinylaromaten oder offenkettige konjugierte Diene eingesetzt. Beispielsweise seien genannt Styrol, Vinyltoluol, $\alpha$-Methylstyrol, Ethylstyrol, iso-Propylstyrol, tert.-Butylstyrol, 2,4-Dimethylstyrol, Diethylstyrol, o-Methyl-p-iso-propylstyrol, Halogenstyrole wie Chlorstyrol, Fluorstyrol und Jodstyrol, 2,4-Cyanostyrol, Hydroxystyrol, Nitrostyrol, Aminostyrol und/oder Phenylstyrol. Bevorzugt sind insbesondere Styrol, Vinyltoluol und $\alpha$-Methylstyrol. Als offenkettige Diene sind zu nennen 1,3-Butadien, 2-Methyl-1,3-butadien, 2,3-Dimethyl-1,3-butadien, Pentadien, 2-Neopentyl-1,3-butadien und substituierte 1,3-Butadiene, wie 2-Chlor-1,3-butadien, 2-Cyan-1,3-butadien, substituierte geradkettige konjugierte Pentadiene, geradkettige und verzweigte konjugierte Hexadiene, andere geradkettige oder verzweigte konjugierte Diene mit in der Regel 4 bis 9 Kohlenstoffatomen und deren Mischungen. Der Anteil dieser Comonomere beträgt vorzugsweise 30 bis 95 Gew.-%, insbesondere 45 bis 85 Gew.-%, bezogen auf die Gesamtmenge der Monomere im Polymer A.

Zur Erzielung spezieller Eigenschaften können auch weitere Ausgangsmonomere beispielsweise Ester von Acryl-, Methacryl- und Crotonsäure mit gesättigten Alkoholen, die 1 bis 12 Kohlenstoffe am Alkoholrest enthalten, einzeln oder im Gemisch, verwendet werden. Beispielsweise seien genannt Methylmethacrylat, Ethylacrylat, Butylacrylat, 2-Ethylhexylacrylat. Der Anteil dieser Comonomere beträgt vorzugsweise 0 bis 10 Gew.-%, insbesondere 0 bis 5 Gew.-%, bezogen auf die Gesamtmenge der Monomere im Polymer A.

Als weitere Comonomere können Acrylamid, Methacrylamid, 2-Acrylamido-2-methylpropansulfonsäure, Acrylamidosulfonsäure, Vinylacetat, Vinylsulfonsäure, Allylsulfonsäure, Vinylphosphonsäure, Allylphosphonsäure, Acrylnitril, Methacrylnitril, Dimethylaminoethylacrylat, Diethylaminoethylacrylat, Diethylaminoethylmethacrylat, N-Vinylpyrrolidon, N-Vinylformamid, N-Vinylimidazol, N-Vinylimidazolin, 1-Vinyl-2-methyl-2-imidazolin und/oder deren Mischungen verwendet werden. Diejenigen Monomere dieser Gruppe, die Säuregruppen enthalten, können bei der Copolymerisation in Form der freien Säure oder auch in partiell oder vollständig mit Alkalimetallbasen oder Ammoniumbasen neutralisierter Form eingesetzt werden. Die basischen Acrylate, beispielsweise Diethylaminoethylacrylat, werden mit Säure neutralisiert bzw. quarternisiert und dann der Copolymerisation zugeführt. Außerdem können Vinylester von $\alpha,\alpha$-Dialkylalkanmonocarbonsäuren, beispielsweise Vinylester der Versaticsäure, aber auch Vinylacetat und

Vinylpropionat verwendet werden. Diese modifizierenden Monomere dienen lediglich zur Erzielung spezieller Eigenschaften und sind zu 0 bis 10 Gew.-%, vorzugsweise 0 bis 4%, am Aufbau der Copolymerisate A beteiligt.

Als Monohydroxyverbindungen werden erfindungsgemäß Monoalkohole und monoveretherte Polyalkylenoxidverbindungen verstanden. Als Monoalkohole sind solche mit Alkan- oder Cycloalkanresten, vorzugsweise ($C_8$-$C_{32}$)-Alkohole und deren Isomere, beispielsweise 2-Ethylhexanol, Octanol, Nonanol, Decanol, Dodecanol, ferner Stearyl-, Cetyl-, Ceryl-, Myricylalkohol, ®TCD-Alkohol M (Hoechst, MG: 166, OH-Zahl: 327), Wollwachsalkohole, Cholesterole, Borneole, Isoborneole, Tallölfettalkohole.

Optional können zur Modifizierung der Eigenschaften auch ($C_1$-$C_6$)-Alkohole mit Alkan- und Cycloalkanketten in Anteilen von 0 bis 35 Gew.-% bezogen auf den Anteil an Monohydroxyverbindungen eingesetzt werden, beispielsweise Butanol, Hexanol, Cyclohexanol und/oder deren Mischungen.

Als monoveretherte Polyalkylenoxidverbindungen werden Polyalkylenoxidverbindungen der allgemeinen Formel I

$$R^1\text{-(O-CHR}^2\text{-CHR}^3)_n\text{-OH} \qquad \text{Formel I}$$

eingesetzt. In dieser Formel steht $R^1$ für einen Alkyl-, Cycloalkyl, oder Phenylrest, vorzugsweise für einen Alkylrest mit 1 bis 12, insbesondere 1 bis 4 Kohlenstoffatomen, $R^2$ und $R^3$ stehen für Wasserstoff oder Alkylreste mit 1 bis 4 Kohlenstoffatomen und n bedeutet 1 bis 10, vorzugsweise 1 bis 4. Als Beispiele derartiger Verbindungen seien Methylglykol, Ethylglykol, Butylglykol, Methyldiglykol, Ethyldiglykol, Butyldiglykol, Methyltriglykol, Ethyltriglykol, Butyltriglykol, Methyltetraglykol, Ethyltetraglykol, Butyltetraglykol, ®Polyglykol-M-250 (Hoechst, MG: 260-275, OH-Zahl: 204-215), ®Polyglykol-M-350 (Hoechst, MG: 335-265, OH-Zahl: 154-167), Propylenglykolmethylether, Dipropylenglykolmethylether,Tripropylenglykolmethylether, Propylenglykol-n-butylether, Dipropylenglykol-n-butylether,Tripropylenglykol-n-butylether und Propylenglykolphenylether genannt.

Als Monohydroxyverbindungen gelten im Rahmen dieser Erfindung auch cyclische Ester, mit bevorzugt vier oder mehr Kohlenstoffatomen im Ring, wobei die Kohlenstoffatome des Rings anstelle von Wasserstoff auch andere Substituenten wie Alkyl, Cycloalkyl, Aryl, Aralkyl, Alkoxy enthalten können. Genannt seien Monoalkyl-substituierte ε-Caprolactone wie Monomethyl-, Monoethyl-, Monopropyl-, Monoisopropyl- Monoethylhexyl-, Monodecyl-, Monododecylc-caprolacton; weiterhin Dialkyl -ε-caprolactone, bei denen sich die zwei Alkylgruppen an dem gleichen oder an zwei unterschiedlichen nicht aber beide am ε-C-Atom befinden; weiterhin Trialkyl-ε-caprolactone, in denen zwei oder drei C-Atome im Ring substituiert sind, so lange wie sich am ε-C-Atom nicht zwei Substituenten befinden; weiterhin Alkoxy-ε-caprolactone wie Methoxy- und Ethoxy-ε-caprolacton; weiterhin Cycloalkyl-, Aryl und Aralkyl-ε-caprolactone wie Cyclohexyl-, Phenyl- und Benzyl-ε-caprolacton. Bevorzugt ist das unsubstituierte ε-Caprolacton.

Andere cyclische Ester, die im Rahmen der Erfindung eingesetzt werden können und zumindest einen zur Ringöffnung befähigten inneren Ester enthalten, sind γ-Butyrolacton, γ-Valerolacton, Ethylencarbonat, Tetramethylencarbonat, 2,2-Dimethyl-4-phenyl-1,3-dioxolan-5-on, α-n-Propyl-δ-valerolacton, δ,δ-Dimethyl-δ-valerolacton, 3-Ethyl-1,4-dioxan-2-on, 3,3,6-Trimethyl-1,4-dioxan-2-on, Tetramethylglykolid, Tetraphenylglykolid, 3-Oxa-ε-caprolacton, β-Propiolacton, α,α-Bis(chlormethyl)propiolacton, β-Butyrolacton, Pivalolacton (PVL), Thiobutyrolacton (TBL), δ-Valerolacton (DVL), α,β,γ-Trimethoxy-δ-valerolacton, 1,4-Dithian-2,5-dion, Trimethylencarbonat, Neopentylcarbonat, Ethylenoxolan, β-Methyl-ε-isopropyl-ε-caprolacton, Propylenoxolan, 4-Hydroxycyclohexancarbonsäurelacton, cis-Disalicylid und Trisalicyclid, sowie deren Mischungen. Bevorzugte Verbindungen sind γ-Butyrolacton, δ-Valerolacton, Pivalolacton, Thiobutyrolacton, β-Butyrolacton, ε-Caprolacton sowie deren Mischungen.

Im Rahmen der Erfindung kommen als flüchtige Neutralisationsreagenzien basische Verbindungen in Frage, die unter den Reaktionsbedingungen mit den Carboxylgruppen keine kovalente Bindung ausbilden. Vorzugsweise geeignet sind Amine, insbesondere tertiäre Amine, Amide, ferner Heterocyclen, insbesondere elektronenarme Heteroaromaten, beispielsweise Pyridin, Pyridazin, Pyrimidin, Pyrazin, Chinolin oder Isochinolin. Besonders bevorzugte flüchtige basische Neutralisationsreagenzien werden durch Formel II repräsentiert,

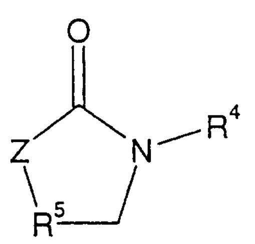

Formel II

in der

$R^4$: Alkyl oder Cycloalkyl,
$R^5$: $(CH_2)_l$,
Z: $(CH_2)_m$ oder O,
l: 0 bis 5 und
m: 1 bis 5 bedeuten.

Beispielhaft seien genannt N-Methyl-2-piperidin, N-Ethyl-2-piperidin, N-Methylpyrrolidon, N-Ethylpyrrolidon, N-Methylcaprolactam, 2,5-Piperazindion und N-Methyl-2-oxazolidon genannt. Besonders bevorzugt ist N-Methylpyrrolidon (N-Methyl-2-pyrrolidinon).

Die flüchtigen basischen Neutralisationsreagenzien werden in einem Anteil zugesetzt, der eine ausreichende Neutralisation der Carboxylgruppen-haltigen Monomere vor ihrem Einbau in das wachsende Makromolekül gestattet. Für eine Polymerisation unter Standard-Bedingungen bedeutet dies, daß eine Menge an flüchtigen basichen Neutralisationsreagenzien von vorzugsweise zumindestens 10 Mol-%, insbesondere 20 bis 70 Mol-%, bezogen auf den Anteil der Carboxylgruppen-haltigen Monomere, ausreicht.

Die Synthese der Polymere A wird üblicherweise bei Temperaturen von 20 bis 400 °C, vorzugsweise bei 80 bis 300 °C, insbesondere bei 100 bis 230 °C, durchgeführt. Vorteilhaft wird bei konstanter Temperatur unter Normaldruck und wenn notwendig unter gleichzeitiger Abtrennung von Niedrigsiedern, aber auch mit Überdruck, vorzugsweise bis 15 bar, insbesondere bis 5 bar, gearbeitet.

Die Initiierung der Polymerisationen zur Herstellung der Polymeren A kann durch die dem Fachmann bekannten thermisch zerfallenden Radikalbildner aus der Reihe der Azoverbindungen, Peroxide, Persäureester oder Hydroperoxide erfolgen. Bevorzugt werden organische Peroxide eingesetzt, vorzugsweise Dialkylperoxide insbesondere Di-tert.-Butylperoxid, Di-tert.-Amylperoxid oder Cumolhydroperoxid.

Zur Steuerung der Copolymerisation kann optional unter Zusatz eines Lösungsmittels gearbeitet werden, das nach Beendigung der Reaktion im Vakuum entfernt wird. Die Menge des Lösungsmittels beträgt bis zu 50 Gew.-%, vorzugsweise bis zu 20 Gew.-%, insbesondere auch ganz ohne weiteres Lösungsmittel bezogen auf das Polymer A. Als Lösungsmittel ist bevorzugt 3-Ethoxyethylpropionat einzusetzen, das unter den Reaktionsbedingungen als verkapptes Ethylacrylat reagiert. Falls erforderlich, können zur Molekulargewichtseinstellung den Sachkundigen allgemein bekannte Regler verarbeitet werden, beispielsweise solche auf Basis von organischen Thioverbindungen.

Nach Beendigung der Synthese können die flüchtigen basischen Neutralisationsreagenzien von den Polymeren A, vorzugsweise im Vakuum, abgetrennt werden und stehen dann in der Regel ohne aufwendige Reinigung für den erneuten Einsatz zur Verfügung.

Die Copolymere A lassen sich nach zumindest teilweiser Neutralisation mit Basen, wie Ammoniak oder Aminen, vorzugsweise Tri-, Di- oder Monoalkylaminen beispielsweise Triethanolamin, Morpholin oder Alkanolaminen wie 2-Amino-1-methyl-1-propanol oder Alkali- oder Erdalkalihydroxiden oder deren Gemischen in Wasser auflösen und sind so sehr vorteilhaft als Bindemittel für wäßrige Druckfarben oder als Stabilisatoren für die Emulsionspolymerisation zu verwenden. Im allgemeinen ist es dabei ausreichend, eine Teilneutralisation von 50 bis 95 % durchzuführen, bevorzugt ist aber eine Überschuß-Neutralisation auf einen pH-Wert von 7,5 bis 11, vorzugsweise 8 bis 9.

Zur Herstellung der Lösung des zumindest teilneutralisierten Harzes im Fabrikationsmaßstab hat sich die Inversverdünnung, also der direkte Eintrag der Harzschmelze des Copolymerisats vom Typ A in Wasser/Neutralisationsmittel bei einer Harztemperatur von 100 bis 250 °C, vorzugsweise 150 bis 220 °C und mindestens bei Normaldruck, als vorteilhaft erwiesen. Zweckmäßigerweise wird die wäßrige Mischung dann noch bei mindestens Normaldruck 30 min bis 3 Std. bei 80-95°C, vorzugsweise bei ca. 90°C gehalten. Optional kann besonders bei hochviskosen Schmelzen von Harzen mit hoher Glasübergangstemperatur mit niedermolekularen gesättigten aliphatischen Carbonsäuren und/oder mit Glykolethern versetzt werden, um eine deutliche Absenkung der Schmelzviskosität zu erzielen. Hier sind Anteile bis zu 20 Gew.-% Zuschlagstoffe bezogen auf den Harzanteil zweckmäßig. Als Carbonsäuren sind Ameisensäure, Milchsäure, Malonsäure, Bernsteinsäure, Weinsäure oder Citronensäure, vorzugsweise Essigsäure einsetzbar. Als Glykolether seien genannt Ether von Ethylenglykol, Propylenglykol, Butylenglykol, beispielsweise 2-n-Propoxyethanol, 2-(1-Methylethoxyethanol), 2-n-Butoxyethanol, 2-(2-Methoxyethoxy)ethanol, 2-(2-Ethoxyethoxy)ethanol, 2-(2-Butoxyethoxy)ethanol, Triethylenglykolmonomethylether, Tetraethylenglykolmonomethylether, 2,5,8,11-Tetraoxadodecan, 1-Methoxy-2-propanol, 1-Ethoxy-2-propanol, Tripropylenglykolmonomethylether. Bevorzugt wird 2-(2-Ethoxyethoxy)ethanol und/oder 1-Methoxy-2-propanol verwendet. Üblicherweise wird jedoch die Inversverdünnung vollkommen ohne Zusatz von Lösungsmitteln durchgeführt.

Erfindungsgemäß enthalten die Kunstharzmischungen neben den Polymeren A optional auch Polymere B. Die Herstellung der Polymere B erfolgt über Emulsionspolymerisation in Gegenwart von zumindest teilneutralisiertem Polymer A. Die Polymere A sollen in einer Menge vorhanden sein, die ausreichend ist, die erwünschten Emulgiereffekte herbeizuführen. Andererseits sollte sowohl aus wirtschaftlichen Gründen als auch aus Gründen der Beeinflussung der anwendungstechnischen Eigenschaften der herzustellenden Emulsionspolymerisate der Anteil der Polymere A nicht zu hoch sein. Es wird deshalb ein Gehalt an Polymeren A von 4 bis 56 Gew.-%, insbesondere 10 bis 50 Gew.-%, bezogen

auf die Menge der Polymere A und B, bevorzugt eingesetzt. Sehr gute Ergebnisse werden erzielt, wenn vorzugsweise 12 bis 42 Gew.-% Polymere A bezogen auf die Summe von A und B, eingesetzt werden.

Verfahren zur Emulsionspolymerisation sind dem Fachmann bekannt. Üblicherweise zeichnen sie sich dadurch aus, daß in wäßriger Phase in Gegenwart von Radikalstartern und Emulgatoren, Schutzkolloiden eine radikalische Polymerisation von ethylenisch ungesättigten Monomeren durchgeführt wird. Die genannten Komponenten können auf verschiedene Weise in die Emulsionspolymerisation eingebracht werden. Bei Verwendung der erfindungsgemäßen Polymere A in Emulsionspolymerisationen kann auf die Gegenwart von niedermolekularen Tensiden und auf Schutzkolloide verzichtet werden. Die wäßrige Phase wird üblicherweise zum größten Teil vorgelegt, wobei eine anteilige Zugabe von Wasser während der Reaktion in Form einer Radikalstarterlösung oder Monomerpreemulsion möglich ist. Die Polymere A können vollständig oder teilweise vorgelegt und der Rest während der Polymerisation zudosiert werden. Die Monomere können vollständig vorgelegt werden oder in reiner Form oder als Preemulsion mit Polymer A in Wasser zudosiert werden. Der Radikalstarter wird meistens teilweise vorgelegt und teilweise als wäßrige Lösung zudosiert. Als Vorlage wird die Mischung bezeichnet, die vor Einstellung der Reaktionstemperatur von üblicherweise 20 bis 99 °C in den Reaktor eingebracht wird. Die Polymerisation wird meistens durch thermische Zersetzung der Radikalstarter oder durch Redoxsysteme eingeleitet und kann als beendet angesehen werden, wenn der größte Teil der durch radikalische Kettenreaktion umsetzbaren Monomeren abreagiert ist. Üblicherweise bleiben bei diesem Verfahren ca. 0,001 bis 0,1 Gew.-% Restmonomere zurück. Weitere Verfahren bzw. Verfahrensvarianten werden beispielsweise in Ullmann, Enzyklopädie der technischen Chemie, 4. Auflage, Verlag Chemie, Weinheim (1980), Band 19, Seiten 132 ff. sowie in Encyclopedia of Polymer Science and Engineering, Volume 6, Wiley & Sons, New York 1986, Seiten 1-51, ausführlich geschildert.

Das Polymer B der Dispersion wird durch Monomere erzeugt, die wenigstens zu einem erheblichen Teil in Wasser schwerlöslich sind und auch bei Änderung des pH-Wertes schwerlöslich bleiben. Unter schwerlöslich wird eine Löslichkeit von weniger als 10 Gew.-%, insbesondere weniger als 5 Gew.-% bei 25 °C verstanden. Der Anteil der schwerlöslichen Monomeren muß wenigstens so groß sein, daß das entstehende Emulsionspolymerisat unter den Polymerisationsbedingungen in der Wasserphase unlöslich ist und in Form dispergierter Teilchen vorliegt. Im Sinne der Erfindung werden vorzugsweise solche Mischungen verwendet, die zu mindestens 70 Gew.-% und insbesondere zu mindestens 90 Gew.-% aus schwerlöslichen Monomeren bestehen.

Geeignete Monomere enthalten mindestens eine ethylenisch ungesättigte Gruppe. Die Begriffe ethylenisch ungesättigt, vinylisch ungesättigt und $\alpha,\beta$-ungesättigt werden synonym verwendet. Dem Fachmann ist bekannt, daß derartige Monomere sich unter den Bedingungen der Emulsionspolymerisation in einem wäßrigen Medium zu Polymeren verbinden lassen. Dazu zählen beispielsweise Vinylverbindungen, Styrole und Acrylate sowie deren Derivate. Zu den geeigneten Vinylverbindungen zählen beispielsweise Vinylchlorid sowie Vinylester wie Vinylacetat, Vinylpropionat, Vinylester der Versaticsäure aber auch Vinylfettsäureester wie Vinyllaurat. Geeignete Styrolverbindungen sind Styrol, Vinyltoluol, $\alpha$-Methylstyrol, Ethylstyrol, iso-Propylstyrol, tert.-Butylstyrol, 2,4-Dimethylstyrol, Diethylstyrol, o-Methyl-p-iso-propylstyrol, Halogenstyrole wie Chlorstyrol, Fluorstyrol und jodstyrol, 2,4-Cyanostyrol, Hydroxystyrol, Nitrostyrol, Aminostyrol und/oder Phenylstyrol. Bevorzugt sind insbesondere Styrol, Vinyltoluol und $\alpha$-Methylstyrol. Als geeignete Acrylate seien beispielhaft Acrylsäure-, Methacrylsäure- und Crotonsäure-Ester genannt, beispielsweise auch Ester die Hydroxyfunktionen enthalten, wie Hydroxyethylacrylat und Hydroxyethylmethacrylat. Bei der Emulsionspolymerisation können selbstverständlich auch Mischungen derartiger ethylenisch ungesättigter Monomere polymerisiert werden, soweit sie sich zur Copolymerisation eignen. Um Dispersionen mit Glasübergangstemperaturen von über 75 °C zu erhalten, wird bevorzugt von Styrol oder Styrolderivaten und/oder Methacrylaten ausgegangen.

Geeignete Initiatoren sind üblicherweise wasserlösliche radikalbildende Verbindungen, beispielsweise Wasserstoffperoxyd, Peressigsäure, Perbenzoesäure sowie Perdisulfate, beispielsweise Kalium- oder Ammoniumperoxodisulfat, Per-phosphate, Per-oxycarbonate und Hydroperoxide, wie tert.-Butylhydroperoxid. Geeignete Redoxkatalysatorsysteme sind beispielsweise Natriumpersulfat/Natriumformaldehydsulfoxylat, Cumolhydroperoxid/Natriummetabisulfit, Wasserstoffperoxid/Ascorbinsäure und Schwefeldioxid/Ammoniumpersulfat. Geeignet sind auch Azo-Verbindungen, wie 4,4-Azo-bis-(cyanopentansäure). Die Katalysatoren werden in üblichen katalytisch wirksamen Konzentrationen verwendet. Diese liegen im allgemeinen zwischen 0,01 bis 4,0 Gew.-%, bezogen auf die Dispersion.

In besonderen Ausführungsformen können weitere für die Emulsionspolymerisation übliche Komponenten verwendet werden. Dies sind beispielsweise Beschleuniger, Puffer und beliebige andere Bestandteile, die neben den erfindungsgemäßen Polymeren A in der Emulsionspolymerisationsreaktionsmischung verwendet werden können und aus dem Stand der Technik zu Emulsionspolymerisationsverfahren bekannt sind. Dies sind beispielsweise $Fe^{2+}$-Salze, die z. B. in Kombination mit Natriumformaldehydsulfoxylaten eine Beschleunigung der Radikalbildung von Radikalstartern bewirken oder als Puffer wirkende Salze, beispielsweise Phosphate, Carbonate, Citrate, die zur Stabilisierung des pH-Wertes verwendet werden können. Derartige Additive können bis zu 3 Gew.-% in der Dispersion enthalten sein. Bei der Durchführung der Emulsionspolymerisation hat es sich neben der Einstellung der Konzentration der Flotte als besonders zweckmäßig erwiesen, eine Vorpolymerisation von 1 bis 15 Gew.-% der Initiator und Monomerenmenge durchzuführen, da so die Qualität der Dispersion, insbesondere bezüglich Transparenz und Viskosität, exakter kontrollierbar wird.

Ein weiterer Gegenstand der Erfindung ist die Verwendung der Polymermischung nach Anspruch 1 zur Herstellung von Bindemitteln für Druckfarben und Drucklacke auf Wasserbasis zum Bedrucken von Papier, Pappe, Kartonagen, Folien und dergleichen, beispielsweise mit dem Farbwerk einer Bogen- oder Rollenoffsetmaschine, aus Feuchtwerken, separaten Lackieraggregaten von Bogen- oder Rollenoffset-Druckmaschinen, Bogenlackiermaschinen, Tief- und Flexodruckmaschinen. Bei der Verwendung der erfindungsgemäßen Harzlösungen und Dispersionen als Bindemittelträger für Drucklacke und Druckfarbe beträgt deren Feststoffgehalt im allgemeinen 40 bis 75 Gew.-%. Diese Lacke und Farben enthalten 1 bis 70 Gew.-% erfindungsgemäße Dispersionen und/oder 1 bis 40 Gew.-% erfindungsgemäße Festharze sowie 0 bis 60 Gew.-% Glykole oder Glykolether, 0 bis 30 Gew.-% Netzmittel, 0 bis 35 Gew.-% Neutralisationsmittel (Basen), 0 bis 30 Gew.-% natürliche und/oder synthetische Wachse, 0 bis 1,5 Gew.-% Entschäumer, 0 bis 80 Gew.-% Wasser, 0 bis 60 Gew.-% Pigmente, 0 bis 2 Gew.-% Additive zur Verbesserung der Abriebfestigkeit, beispielsweise ®Byk 301 (Byk-Mallinckrodt), 0 bis 3 Gew.-% Additive zur Verbesserung der Kratzbeständigkeit, beispielsweise ®Aqua Polyfluo (Micro Powders), 0 bis 1,5 Gew.-% Levelling-Agenzien, beispielsweise ®Triton X 200 (Rohm & Haas) sowie 0 bis 5 Gew.-% Weichmacher, beispielsweise Triethylcitrat. Das Pigment/Bindemittel-Verhältnis bei Anreibeoperationen beträgt zwischen 5 : 95 und 95 : 5 bevorzugt 30 : 70 bis 70 : 30. Für die Anwendung als Pigmentanreibekomponenten sind auch Festkörpergehalte von größer 30 Gew.-% zweckmäßig. Für den Aufbau dieser Stammfarben, Pigmente und Druckfarben sind auch Mischungen verschiedener Typen von Dispersionen oder Harzlösungen zweckmäßig. Zur Einarbeitung von Pigmenten (beispielsweise Titandioxid, Buntpigmente, synthetische Ruße), Füllstoffen (beispielsweise Talkum, Chinaclay, Wachse), Farbstoffen und Verlaufsmitteln in die Lösungen und/oder Dispersionen und/oder deren Mischungen und/oder deren Verdünnungen sind die allgemein üblichen Mahl-, Misch-, Knet- und Anreibegeräte optional in Gegenwart üblicher Dispergierhilfsmittel einsetzbar.

Die Herstellung der erfindungsgemäßen Polymere A sowie die Herstellung der erfindungsgemäßen Polymermischungen durch Emulsionspolymerisation sowie deren Verwendung in Druckfarben und Drucklacken wird durch nachfolgende Beispiele erläutert. Die in den Beispielen aufgeführten Teile und Prozente beziehen sich auf das Gewicht, soweit nicht anders vermerkt. Alle Beispiele sind unter Schutzgas, bevorzugt Stickstoff, durchgeführt worden.

## BEISPIELE

### Beispiel 1

In 225 °C temperiertes N-Methylpyrrolidon (100 g) wird bei einem Druck von 150 kPa unter Rühren ein Monomergemisch bestehend aus Acrylsäure (77 g), Styrol (63 g) und $\alpha$-Methylstyrol (55 g) sowie parallel dazu Cumolhydroperoxid (8 g) über ca. 4 Stunden dosiert, wobei der Druck auf etwa 200 kPa ansteigt. Nach Abtrennung von N-Methylpyrrolidon im Vakuum bei 230 °C erhält man ein Festharz mit einer Säurezahl von 222, einem $T_g$ von 76 °C und einem $M_w$ von 1.800.

### Beispiel 2

In 200 °C temperiertes N-Methylpyrrolidon (23 g) wird unter Rühren ein Monomergemisch bestehend aus Acrylsäure (37 g), Styrol (30 g) und $\alpha$-Methylstyrol (33 g) sowie parallel dazu Cumolhydroperoxid (1,7 g) über ca. 5 Stunden dosiert und eine weitere Stunde bei dieser Temperatur gehalten. Nach Abtrennung von N-Methylpyrrolidon im Vakuum bei 220°C erhält man ein Festharz mit einer Säurezahl von 235, einem $T_g$ von 86 °C und einem $M_w$ von 4.500.

### Beispiel 3

In 180 °C temperiertes N-Methylpyrrolidon (23 g) wird unter Rühren ein Monomergemisch von Acrylsäure (40 g) und Styrol (56 g) und parallel dazu Cumolhydroperoxid (1,5 g) über ca. 5 Stunden dosiert und eine weitere Stunde bei dieser Temperatur gehalten. Nach Abtrennung von N-Methylpyrrolidon im Vakuum bei 210 °C erhält man ein Festharz mit einer Säurezahl von 245, einem $T_g$ von 103 °C und einem $M_w$ von 11.000.

### Beispiel 4

In 170 °C temperiertes N-Methylpyrrolidon (23 g) wird unter Rühren ein Monomergemisch bestehend aus Acrylsäure (36 g), Styrol (27 g) und $\alpha$-Methylstyrol (31 g) sowie parallel dazu Cumolhydroperoxid (1,4 g) über ca. 5 Stunden dosiert und eine weitere Stunde bei dieser Temperatur gehalten. Nach Abtrennung von N-Methylpyrrolidon im Vakuum bei 230 °C erhält man ein Festharz mit einer Säurezahl von 243, einem $T_g$ von 141 °C und einem $M_w$ von 13.000. Versetzt man das noch flüssige Polymer vor dem Erstarren mit 1-Methoxy-2-propanol (11,5 g) und Essigsäure (100 %, 9,4

g) und trägt diese Masse in Wasser (143 g) / Ammoniak (25 %ig, 36 g) ein, wird eine Harzlösung mit 33,5 % Festkörperanteil, einem pH von 9,1 und einer Viskosität von 1521 mPa • s (Ubbelohde) erhalten.

Vergleichende Gegenüberstellung:

Aus Festharzen der Beispiele 2 und 3 und der Harze des Standes der Technik (VGL-Harze) werden 25%ige Lösungen in Wasser/Ammoniak hergestellt, wobei eine 110%ige Neutralisation der Säuregruppen vorgenommen wird. Es wird 2 Minuten im Skandex-Mischer geschüttelt und die Dichte bestimmt.

Testreihe I enthält geringfügige Mengen Entschäumer, Testreihe II eine Standardmenge eines handelsüblichen Entschäumers, Testreihe III entspricht Testreihe II nach 2 Tagen Lagerung.

Test I: Zugabe 0,2 % (auf Harz-Lösung) ®Surfinol 104 (Entschäumer, Air Products)
Test II: Zugabe 1,5 % (auf Harz-Lösung) Surfinol 104
Test III: Harzlösung aus Test II nach 2 Tagen Lagerung

| Schaum [g/ml] | Beispiel 2 $M_w$ 4.500 | VGLHarz 1 * $M_w$ ca.4.200 | Beispiel 3 $M_w$ ca.11.000 | VGL-Harz 2 * $M_w$ ca.10.000 |
|---|---|---|---|---|
| Test I | 0,76 | 0,65 | 0,79 | 0,71 |
| Test II | 0,87 | 0,78 | 0,88 | 0,77 |
| Test III | 0,83 | 0,69 | 0,85 | 0,74 |

* Standard Harz aus Acrylsäure und Styrol nach EP-A 0 068 024 oder EP-A 0 129 913.

**Beispiel 5**

Eine mit Wasser auf einen Festkörpergehalt von 25 % verdünnte Harzlösung aus Beispiel 4 wird unter Stickstoff auf 90 °C erhitzt (600 g). Nach Erreichen von 90 °C wird Styrol (10 g) und parallel dazu Ammoniumperoxodisulfat (0,4 g) in Wasser (5 g) hinzugefügt und 20 Minuten bei 90 °C gerührt. Nun wird innerhalb von ca. 3 Stunden eine Dosierung von Styrol (440 g) und parallel dazu eine Dosierung von Ammoniumperoxodisulfat (2 g) in Wasser (200 g) durchgeführt.

Man läßt ca. 1 Stunde nachreagieren, gegebenfalls unter Zugabe eines Redoxsystems, kühlt ab und erhält so eine stippenfreie Dispersion mit einem Festkörpergehalt von ca. 47,8 %, einem pH von 8,7 und einer Viskosität von ca. 1.230 mPa • s (Ubbelohde).

**Beispiel 6**

73 Teile einer 43%igen ammoniakalischen Harzlösung (110 % Neutralisation) von Beispiel 1 werden versetzt mit 70 Teilen der auf 43 % Festkörper eingestellten Dispersion aus Beispiel 5, 1 Teil Wasser sowie 2 Teilen Butyldiglykol und 0,8 Teilen Surfinol 104. Dieser Hochglanzüberdrucklack wird mit Wasser auf DIN-Auslaufzeit von 50 s (4 mm/23 °C) eingestellt (41 % Festkörpergehalt).

**Beispiel 7**

67 Gew.-Teile einer 40%igen wäßrigen ammoniakalischen Lösung von Harz aus Beispiel 1 werden mit 16 Teilen ®Permanent Gelb GRX (Gelbpigment, Hoechst), 0,7 Teilen Surfinol 104 und 0,9 Teilen Wasser 30 Minuten bei Raumtemperatur mit Glaskugeln im Paintshaker geschüttelt. Nach Absieben über ein 100µm-Sieb wird eine Stammfarbe erhalten, die nach Verdünnen mit Dispersionen des Beispiels 5 auf 7 % Pigmentgehalt eine geeignete Druckfarbe gibt.

85 g eines Überdrucklacks aus Beispiel 6 oder einer Druckfarbe nach Beispiel 7 werden in einer 100 ml Flasche im Skandex-Mischer 5 Minuten geschüttelt und anschließend die Dichte bestimmt.

Schaumvolumen = (1,05 : Dichte X 100) - 100.

Vergleichender Schaumtest Überducklacke und Druckfarben:

Test I: Überdrucklack / Druckfarbe frisch angesetzt
Test II: Überdrucklack / Druckfarbe nach 2 Tagen Lagerung

| Schaumvolumen (1,05 : Dichte X 100) - 100 | Überdrucklack Beispiel 6 | Vergleichs-Überdrucklack** | Druckfarbe Beispiel 7 | Vergleichs-Druckfarbe*** |
|---|---|---|---|---|
| Test-Reihe I | 7,4 | 14,3 | 9,6 | 15,2 |
| Test-Reihe II | 9,4 | 17,3 | 11,6 | 20,2 |

** Überdrucklack, erzeugt analog Beispiel 6 mit einem Harz aus Acrylsäure und Styrol nach EP-A 0 068 024 oder EP-A 0 129 913 und einer Dispersion nach WO-A 91/04 990.
*** Druckfarbe erzeugt analog Beispiel 7 mit einem Harz aus Acrylsäure und Styrol nach EP-A 0 068 024 oder EP-A 0 129 913 und einer Dispersion nach WO 91/04 990.

**Patentansprüche**

**1.** Anionische Polymermischung mit reduzierter Schaumbildung in Wasser, enthaltend

a) ein gegebenenfalls neutralisiertes oder teilneutralisiertes Säuregruppen-haltiges Polymer A, hergestellt durch Polymerisation von Carboxylgruppen-haltigen ethylenisch ungesättigten Verbindungen mit weiteren ethylenisch ungesättigten Verbindungen in Gegenwart von flüchtigen basischen Neutralisationsreagenzien, und gegebenenfalls
b) ein wasserunlösliches Polymer B in Form von Latexteilchen, herstellbar durch Emulsionspolymerisation von ethylenisch ungesättigten Verbindungen in Gegenwart des Polymeren A.

**2.** Polymermischung nach Anspruch 1, dadurch gekennzeichnet, daß das Polymer A eine Säurezahl (mg KOH/g Polymer) im Bereich von 90 bis 400 aufweist.

**3.** Polymermischung nach Anspruch 1, dadurch gekennzeichnet, daß die Glasübergangstemperatur der Polymere A zwischen 0 und 180 °C liegt.

**4.** Verfahren zur Herstellung einer Polymermischung nach Anspruch 1, dadurch gekennzeichnet, daß

a) ein Säuregruppen-haltiges Polymer A hergestellt wird durch Polymerisation von Carboxylgruppen-haltigen ethylenisch ungesättigten Verbindungen mit weiteren ethylenisch ungesättigten Verbindungen in Gegenwart von flüchtigen basischen Neutralisationsreagenzien und gegebenenfalls
b) ein wasserunlösliches Polymer B in Form von Latexteilchen hergestellt wird durch Emulsionspolymerisation von ethylenisch ungesättigten Verbindungen in Gegenwart des neutralisierten oder teilneutralisierten Polymeren A.

**5.** Verfahren zur Herstellung einer Polymermischung nach Anspruch 4, dadurch gekennzeichnet, daß als flüchtige Neutralisationsreagenzien basische Verbindungen eingesetzt werden, die unter den Reaktionsbedingungen mit den Carboxylgruppen keine kovalente Bindung ausbilden.

**6.** Verfahren zur Herstellung einer Polymermischung nach Anspruch 4, dadurch gekennzeichnet, daß als flüchtige basische Neutralisationsreagenzien Verbindungen gemäß Formel II eingesetzt werden,

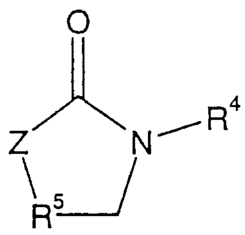

Formel II

in der

| | |
|---|---|
| $R^4$: | Alkyl oder Cycloalkyl, |
| $R^5$: | $(CH_2)_l$, |
| Z: | $(CH_2)_m$ oder O, |
| l: | 0 bis 5 und |
| m: | 1 bis 5 bedeuten. |

**7.** Verfahren zur Herstellung einer Polymermischung nach Anspruch 4, dadurch gekennzeichnet, daß die flüchtigen basischen Neutralisationsreagenzien in einer Menge von 20 bis 70 Mol-%, bezogen auf die Carboxylgruppen-haltigen Monomere, eingesetzt werden.

**8.** Verfahren zur Herstellung einer Polymermischung nach Anspruch 4, dadurch gekennzeichnet, daß während der Polymerisation der Carboxylgruppenhaltigen ethylenisch ungesättigten Verbindungen eine "in situ"-Kondensation mit Monohydroxyverbindungen durchgeführt wird.

**9.** Verwendung einer Polymermischung nach Anspruch 1 zur Herstellung von Bindemitteln für Druckfarben und Drucklacke auf Wasserbasis.